(19)

Europäisches
Patentamt

European
Patent Office

Office européen
des brevets

(11) **EP 3 264 743 A1**

(12) **EUROPEAN PATENT APPLICATION**

(43) Date of publication:
**03.01.2018 Bulletin 2018/01**

(51) Int Cl.:
*H04N 5/232* (2006.01)    *H04N 5/225* (2006.01)

(21) Application number: **16305825.8**

(22) Date of filing: **30.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **KERBIRIOU, Paul**
  **35576 Cesson-Sévigné (FR)**
• **DRAZIC, Valter**
  **35576 Cesson-Sévigné (FR)**
• **SEIFI, Mozhdeh**
  **35576 Cesson-Sévigné (FR)**

(74) Representative: **Huchet, Anne
TECHNICOLOR
1-5, rue Jeanne d'Arc
92130 Issy-les-Moulineaux (FR)**

(54) **A DIGITAL IMAGING SYSTEM FOR SWITCHING IMAGE CAPTURING MODE**

(57)    A digital imaging system for switching image capturing mode comprising: a primary lens (10); an image sensor array (143); and an optical element (2) comprising at least a first layer and a second layer and arranged between the primary lens (10) and the sensor array (143), wherein, the first layer having two functioning modes : A first functioning mode, called first layer effect OFF, in which rays of light leaving the first layer to be captured by the image sensor array are not refracted, A second functioning mode, called first layer effect ON, in which rays of light leaving the first layer to be captured by the image sensor array are refracted, a value of a refractive index of the second layer is changed in accordance with a change between the first functioning mode and the second functioning mode of the first layer.

**Description**

TECHNICAL FIELD

The present disclosure generally relates to the field of digital imaging system, and more particularly to lightfield imaging techniques using plenoptic cameras.

BACKGROUND ART

This section is intended to introduce to the reader various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The lightfield cameras output a series of different sub aperture images for specific viewing directions. One type of lightfield camera uses an array of micro lenses placed in front of an image sensor to sense intensity, color, and directional information. Unlike traditional photography, lightfield cameras permit manipulation of viewpoint and refocus after the imagery has been recorded. In recent years, there is growing demand for incorporating functions of lightfield camera into cameras or into some other devices such as smartphones. However, the disadvantage such as decrease of resolution on lightfield camera brought by sorting pixels on the image sensor in accordance with different angle of views may prevent the manufacturers from incorporating lightfield configuration into the cameras.

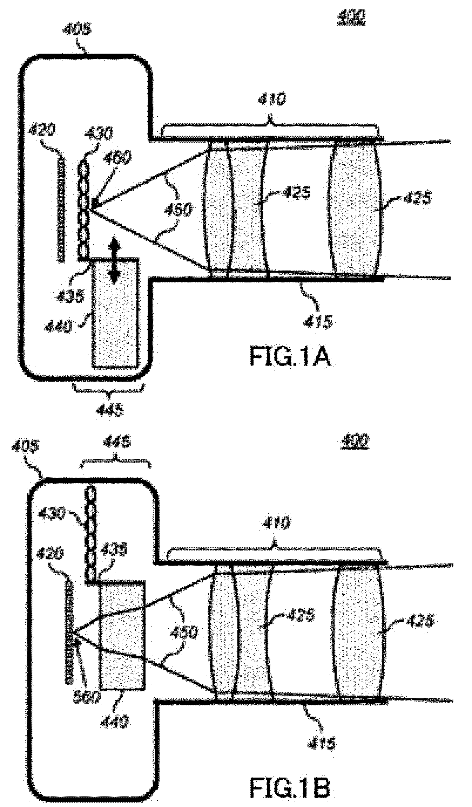

FIG.1A and FIG.1B show a method in state of the art for mode-switching between an image capturing through microlenses and an image capturing without microlenses.

U.S. patent application publication No. 20130076930 A1 discloses that a switchable optical module 445 includes a micro lens array 430 and a glass plate 440, attached to a mounting bracket 435. The switchable optical module 445 can be moved back and forth in a lateral direction to position either the microlens array 430 or the glass plate 440 in the optical path of the imaging lens 410.

In this prior art, the imaging system needs to be modified in accordance with positioning of microlens array 430 in relation with the optical path of the imaging lens 410. In case that microlens array 430 is not placed in the optical path of the imaging lens 410 (FIG1.B), measurement of focal length and principal point (the position of the intersection between the optical axis and the sensor) may be more complex since the measurement requires consideration of not only lens element 425 but also the glass plate 440.

Another drawback related to this prior art is introducing heavy spherical aberrations due to the glass plate 440. In addition to that, the system may require the additional space to install switchable optical module 445.

Thus, a need exists for an improved lightfield camera that does not suffer from at least one of the aforementioned disadvantages.

SUMMARY

According to the present principles, a digital imaging system for switching image capturing mode comprising: a primary lens ;an image sensor array; and an optical element comprising at least a first layer and a second layer and arranged between the primary lens and the sensor array , wherein, the first layer having two functioning modes : A first functioning mode, called first layer effect OFF, in which rays of light leaving the first layer to be captured by the image sensor array are not refracted, A second functioning mode, called first layer effect ON, in which rays of light leaving the first layer to be captured by the image sensor array are refracted, a value of a refractive index of the second layer is changed in accordance with a change between the first functioning mode and the second functioning mode of the first layer..

The present principles also relate to a method for switching image capturing mode in digital imaging system including a primary lens, an image sensor array, and an optical element comprises at least a first layer and a second layer arranged between the primary lens and the sensor array, the first layer having two functioning modes : A first functioning mode, called first layer effect OFF, in which rays of light leaving the first layer to be captured by the image sensor array are not refracted, A second functioning mode, called first layer effect ON, in which rays of light leaving the first layer to be captured by the image sensor array are refracted, the method comprising: changing a value of a refractive index of the second layer in accordance with a mode change between the first functioning mode and the second functioning mode of the first layer (S3).

BRIEF DESCRIPTION OF THE DRAWINGS

FIG.1A and FIG.1B show a method in state of the art for mode-switching between an image capturing through microlenses and an image capturing through without microlenses;

FIG.2 shows exemplary configuration of lightfield camera according to an embodiment of present disclosure;

FIG.3A and FIG.3B show an enlargement view of part of the common imaging mode adaptor system according to an embodiment of present disclosure;

FIG.4 shows a type one lightfield camera system which is configured such that the lenslet array sheet is placed at the focal length of the primary lens according to an embodiment of present disclosure;

FIG.5A illustrates a type two lightfield camera system which is configured such that image of an object placed at the primary lens focal plane is captured via the microlenses according to an embodiment of present disclosure;

FIG.5B illustrates a type two lightfield camera system which is configured such that virtual image of an object placed at the primary lens focal plane is captured via the microlenses according to an embodiment of present disclosure;

FIG.6 shows hardware configuration of a lightfield camera according to an embodiment of present disclosure;

FIG.7 shows a flowchart illustration according to an embodiment of present disclosure.

DETAILED DESCRIPTION

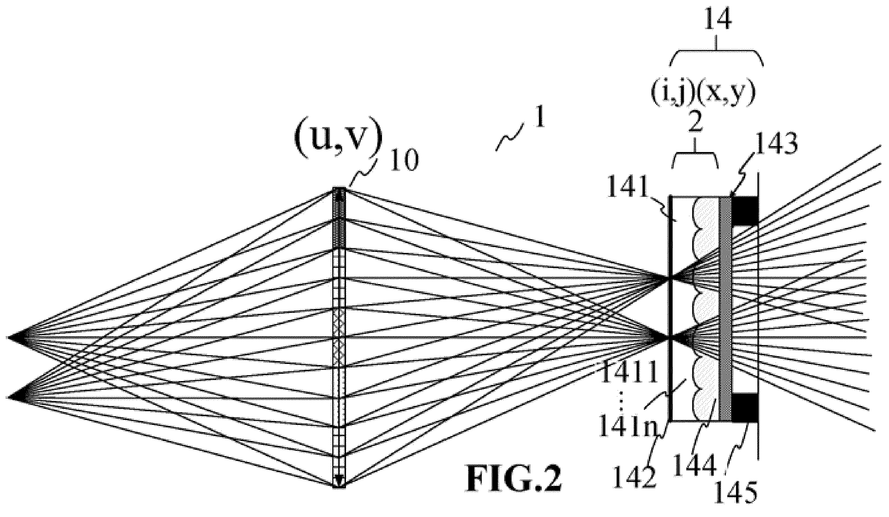

FIG.2 shows an exemplary configuration of lightfield camera according to an embodiment of present disclosure. The lightfield camera 1 comprises a lens arrangement associated with an image sensor array 143.

The lens arrangement comprises a primary lens 10, also called main lens and optical element 2 comprising at least 2 layers, lenslet array sheet 141 and liquid crystal layer 144. The lenslet array sheet 141 comprises a plurality of microlenses 1411, 141n, $n$ being a positive integer greater than or equal to 2. The microlenses 1411, 141n are arranged in such a way as to be optically each associated with a plurality of pixels. The number of $p \times p$ pixels optically associated with one microlens corresponds to the number of views of the scene acquired with the lightfield camera 1. The lightfield camera 1 also comprises a polarizer film 142 and micro motors 145.

The image sensor array 143 comprises a large number $m$ of pixels arranged in the form of a grid of $N_x$ columns and $N_y$ lines, $m$ corresponding to $N_x \times N_y$.

The polarizer film 142 is disposed on the top of lenslet array sheet 141 for transforming un-polarized incoming light (a light wave that is vibrating in more than one plane) into polarized light. The polarizer film 142 may be made of a special material that is capable of blocking one of the two planes of vibration of an electromagnetic wave. The polarizer film 142 may have long-chain molecules aligned within the filter in the same direction, which gives the filter a polarization axis. This polarization axis extends across the length of the filter and only allows vibrations of the electromagnetic wave that are parallel or perpendicular to the axis to pass through. In one of the exemplary embodiment, the polarizer film 142 may block light perpendicular to a plane of incidence and pass light parallel to the plane of incidence. In the other exemplary embodiment, the polarizer film 142 may block parallel light and pass perpendicular light. The polarizer film 142 can be configured or manufactured in variety of ways conceivable by those skilled in the art.

The liquid crystal layer 144 may be connected to a voltage application mean (not illustrated in the figures). The liquid crystal layer 144 may be configured to shift its refractive index to one state to another by changing the orientation of liquid crystal molecular. The refractive index of the liquid crystal layer 144 may be shifted to one state to another state in accordance with the mode change between microlenses effect OFF mode and microlenses effect ON mode. A microlenses effect OFF mode is equivalent to deactivating the effect of lenslet array sheet 141 so that rays leaving the curvature face of the lenslet array sheet 141 are not refracted (not deviated). A microlenses effect ON mode is equivalent to activating the effect of lenslet array sheet 141 so that rays leaving the curvature face of the lenslet array sheet 141 are refracted (deviated). The orientation of molecules in the liquid crystal layer 144 may be defined at the fabrication stage in accordance with the configuration of polarizer film 142 (blocks perpendicular light or parallel light). There may be an alignment layer between the liquid crystal layer 144 and the glass substrate (not illustrated). For instance, an alignment layer may be configured with a rubbed layer of polyamide of which alignment direction sets the orientation of the molecules when the voltage is applied. The change of refractive index of the liquid crystal layer 144 may be explained in later section of this description.

The micro motors 145 are for moving the sensor array 143 to the appropriate position to have an in focused image in accordance with the type of lightfield camera and the above mentioned mode. When the microlenses effect may be deactivated (the mode is switched to microlenses effect OFF mode), the position of sensor array 143 may need to be changed to the focal plane of the primary lens 10. The functions of micro motors 145 will be also explained in later section of this description.

At least one of the lenslet array sheet 141, polarizer film 142, image sensor array 143, liquid crystal layer 144 and micro motors 145 are comprised in a common imaging mode adaptor system 14.

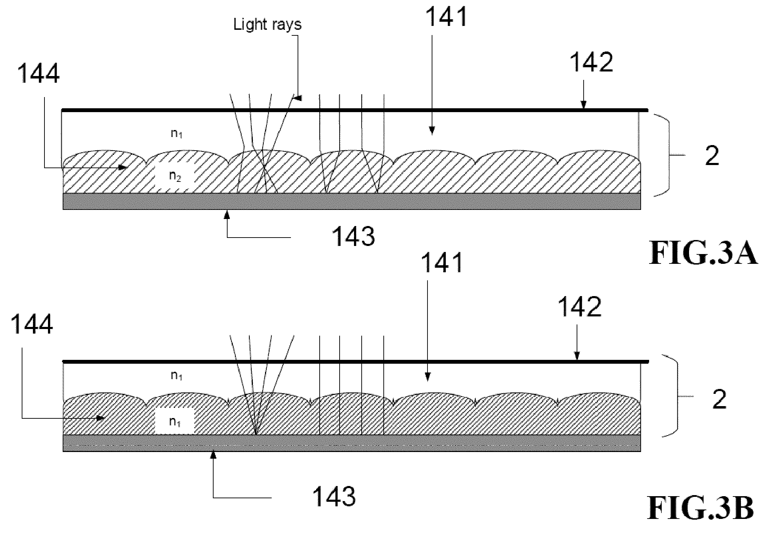

FIG.3A and FIG.3B show an enlargement view of part of the common imaging mode adaptor system according to an embodiment of present disclosure.

In present disclosure, liquid crystal layer 144 is disposed between lenslet array sheet 141 and image sensor array 143. The refractive index of liquid crystal layer 144 can be changed in accordance with the mode change between microlenses effect OFF mode (as depicted in FIG.3B) and microlenses effect ON mode (as depicted in FIG.3A). In order to deactivate the effect of lenslet array sheet 141, refractive index of liquid crystal layer 144 needs to be equal to the refractive index of lenslet array sheet 141 (as depicted in FIG.3B).

Usually the value of the refractive index of lenslet array sheet 141 ($n_1$) is being assumed that more or less equal to $n_1 = 1.5$, however considering the purpose of capturing an image, higher value of the refractive index is preferred such as $n_1 = 1.8$ in order to have the ray refract into the medium rather than refract into an air. Therefore, it is preferred to manufacture lenslet array sheet 141 with the material which has higher refractive index.

In one of the exemplary embodiment, the liquid crystal layer 144 may be configured having a value of the refractive index $n_s$ in one state and another value of the refractive index $n_p$ in another state. In one of the exemplary embodiment, the polarizer film 142 may be configured to block perpendicular light and pass parallel light, in that case, the refractive index of liquid crystal layer 144 may be configured to be $n_s$ to deactivate the microlenses effect. In the other exemplary embodiment, the polarizer film 142 may be configured to block parallel light and pass perpendicular light, in that case, the refractive index of liquid crystal layer 144 may be configured to be $n_p$ to deactivate the microlenses effect. In this exemplary embodiment, s refers to a polarization of the light perpendicular to the plane of incidence, and p refers to a polarization of the light parallel to the plane of incidence. Maybe you should give an example when there is no polarizer film in the camera.

Following equation is for deriving focal length of microlenses 1411, 141n for each of the case where the value of the refractive index of liquid crystal layer 144 is configured to be set *to* $n_s$ in one state and $n_p$ in the other state. In accordance with the polarization of liquid crystal layer 144 (p or s), there may be 2 different types of focal length.

$$\frac{1}{f_{s,p}} = \left(\frac{n_1}{n_{s,p}} - 1\right)\left(\frac{1}{r_1} - \frac{1}{r_2}\right)$$

Where
f is the focal length of the micro lenses 1411, 141n,
*r* is the radius of curvature of the curved face of each of the micro lenses 1411, 141n
$r_2$ is the radius of curvature of the sensor plane,
$n_p$, $n_s$ are the refractive index of the liquid crystal layer 144, and
$n_1$ is the refractive index of the lenslet array sheet 141.

The plane of sensor array 143 is assumed to be flat $|r_2| \to \infty$

In order to deactivate the effect of lenslet array sheet 141, either $n_s$ or $n_p$ needs to be equal to $n_1$. When it is assumed that $n_s = n_1$, it may be derived as $1/f_s = 0$, and $f_s \to \infty$. The rays leaving the curvature face of the lenslet array sheet 141 are not refracted (not deviated) as illustrated in FIG.3B. Also, it can be said that system is in focus.

For the refractive index $n_p$ which has to be chosen such as $n_p < n_1$, the focal length for the microlenses 1411, 141n may be derived by:

$$\frac{1}{f_p} = \left(\frac{n_1}{n_p} - 1\right)\left(\frac{1}{r_1}\right)$$

It is also important to design the radius of curvature $r_1$ in order to solve this equation. For a liquid crystal material, the difference between $n_s$ and $n_p$ can be as big as $|n_p - n_s| = 0.3$. In case where $n_p = 1.5$ and the desired focal length is 100 μm for the array, the radius of curvature of the rear surface of the microlenses 1411, 141n would be 60 μm. This value is appropriate when the microlenses surface corresponds to some tens of microns (such as 10, 20, 30 ......microns) and so, also appropriate for making micro images typically configured with 10x10 or 20x20 pixels with a micron pixel pitch which is center-to-center distance between individual pixels.

The mode change to the microlenses effect OFF mode (as depicted in FIG.3B) requires some other steps to have an image in focus.

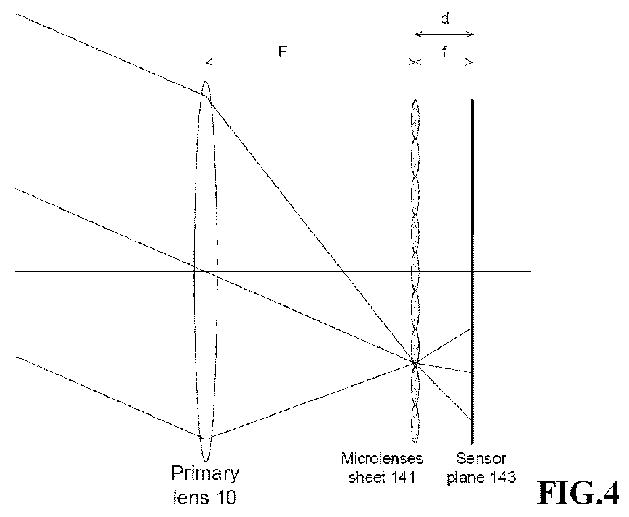

FIG.4 shows a type one lightfield camera system which is configured such that the lenslet array sheet is placed at the focal length of the primary lens according to an embodiment of present disclosure. Therefore, parallel rays entering the primary lens converge onto a point where the lenslet array sheet 141 is disposed. The distance (d) between sensor array 143 plane and lenslet array sheet 141 plane corresponds to the focal length of micro lenses.

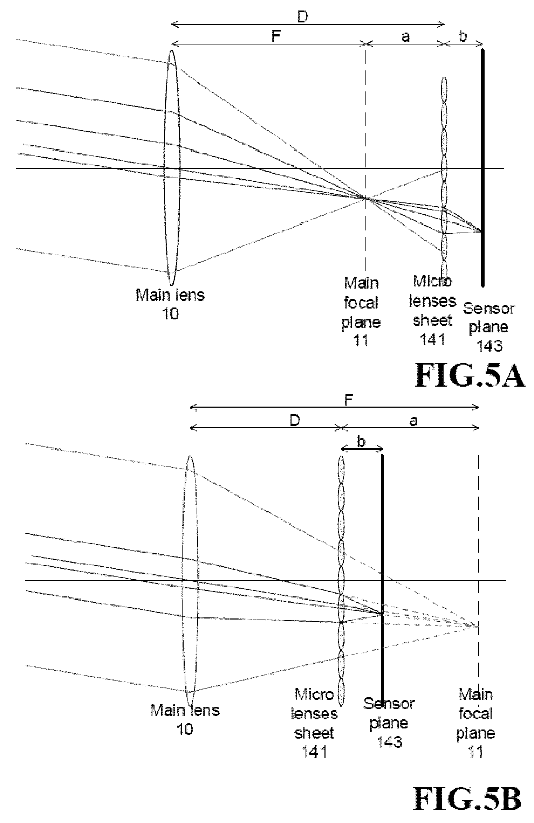

FIG.5 illustrates a type two lightfield camera system which is configured such that image of an object placed at the primary lens focal plane is captured via the microlenses according to an embodiment of present disclosure. In FIG.5, the letter "a" denotes distance between main focal plane and plane of micro lenses sheet 141, the letter "b" denotes distance between plane of image sensor array 143 and plane of micro lenses sheet 141.

According to FIG.5A, in type 2-1 lightfield camera, parallel rays entering the primary lens 10 converge onto a point in front of microlenses. In other word, microlenses sheet 141 and sensor plane 143 are placed behind the main focal plane 11.

According to FIG.5B, in type 2-2 lightfield camera, parallel rays entering the primary lens 10 converge onto a point behind the lenslet array sheet 141 and the sensor plane 143. In other word, microlenses sheet 141 and sensor plane 143 are placed in front of the main focal plane 11.

In accordance with the type (type 1, type 2-1 or type 2-2) of lightfield camera, micro motors 145 may need to be activated to change the location of the image sensor array 143 when the refractive index of the second layer is equal to a refractive index of the first layer.

Following are the one of the examples that illustrates position of microlenses sheet 141 and sensor plane 143.

Table 1:

| Light field camera Types | Disposition |
|---|---|
| Type 1 | f |
| Type 2-1<br>Sensor and microlenses planes are placed behind the main focal plane | a +b |
| Type 2-2<br>Sensor and microlenses planes are placed in front of a main focal plane | b - a |

The disposition of the image sensor array 143 to the focal plane assures that the image may be in focused. In order to set the image sensor array 143 to the right position, it is required to know the value "a" and "b" for type 2 lightfield camera, whereas "f" for type 1 lightfield camera. These values may be derived over the calibration during the manufacture phase or may be calculated afterwards through the post-processing, and these values may be preregistered to the memory of the device. The magnitudes of type 1 lightfield camera 1 is assumed to be f~ 100 $\mu$m whereas magnitudes of type 2 lightfield camera 1 is assumed to be a ~ 100$\mu$m; b ~ 200 $\mu$m. The magnification of a calibration beam (with a pre-defined angle of incidence) gives the relationship between f and (a + b). Several calibrating beams may help refining this relationship.

The micro motors 145 may be configured as linear activators such as voice coil motors with short stroke. Following table 2 represents a sample of such an activator.

Table 2:

| | |
|---|---|
| Stroke | 3.20 mm |
| Radial Clearance | 0.250 mm |
| Moving Mass | 1.20 grams |
| Total Mass | 5.70 grams |
| Electrical Time Constant | 0.04 msec |
| Motor Constant | 0.36 N/√watt |
| Force Constant | 0.45 N/amp |
| Force @ 100% Duty | 0.27 N |
| Power @ 100% Duty | 1 watts |
| Current @ 100% Duty | 0.6 amps |
| Force @ 10% Duty | 0.80 N |
| Power @ 10% Duty | 5 watts |
| Current @ 10% Duty | 1.8 amps |
| Outside Diameter | 11.10 mm |
| Housing Length | 9.00 mm |

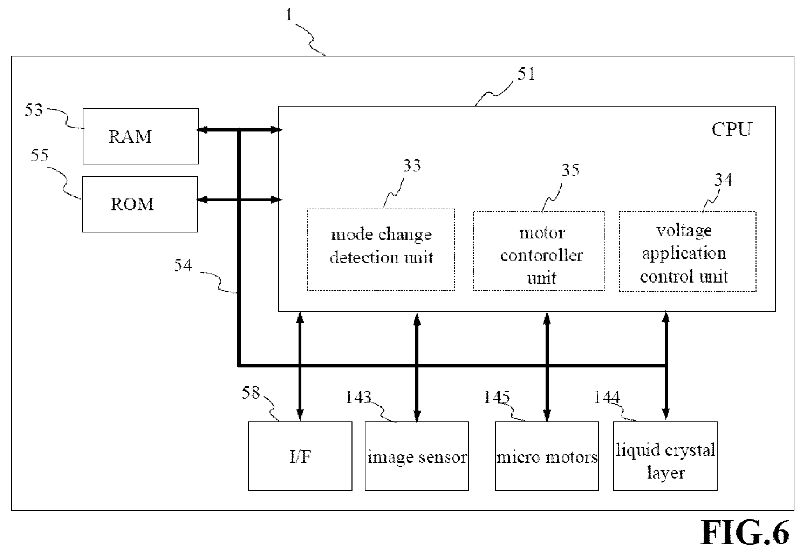

FIG.6 shows hardware configuration of a light field camera according to an embodiment of present disclosure. The lightfield camera 1 comprises the following elements, connected to each other by a bus 54 of addresses and data that also transports a clock signal, a processor 51 (or CPU), a Random Access Memory or RAM 53, a Read Only Memory or ROM 55, a MMI (Man Machine Interface) 58 adapted for displaying information for a user and/or inputting data or parameters, image sensor 143, micro motors 145, and liquid crystal layer 144 (including voltage application means).

It is noted that the word "register" or "store" used in the description of memory 53 designates in each of the memory mentioned, a memory zone of low capacity as well as a memory zone of large capacity (enabling a whole program to be stored or all or part of the data representing data received and decoded).

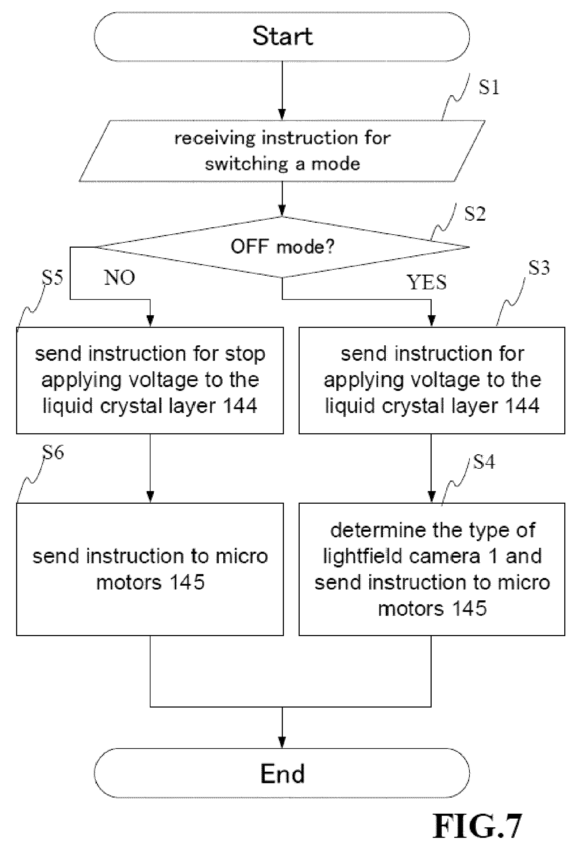

The CPU 51 executes particular program of which algorithms implementing the steps of the method specific to the present disclosure and described in later section of present description and in FIG.7.

The RAM 53 notably comprises in a register, the operating program of the CPU 51 responsible for switching on the lightfield camera 1 (such as mode change detection unit 33, voltage application control unit 34 and motor controller unit 35), reception parameters (for example parameters for modulation, encoding, MIMO, recurrence of frames), transmission parameters (for example parameters for modulation, encoding, MIMO, recurrence of frames), incoming data corresponding to the data received and decoded, decoded data formed to be transmitted at the interface to the application 58, parameters of the primary lens 10 and/or information representative of the centers of the micro-images formed by the microlenses of the microlens array.

According to one of the exemplary embodiment, CPU 51 read instruction from the memory such as RAM or ROM then execute its instruction to implement the steps of the method specific to the present disclosure. For example, program modules to be implemented may be mode change detection unit 33, voltage application control unit 34 and motor controller unit 35. The mode change detection unit 33 detects the mode change instruction designated through the user interface by the user of lightfield camera 1. The voltage application control unit 34 is for controlling application of voltage to the liquid crystal layer 144 in order to control refractive index of liquid crystal layer 144 in accordance with the mode. The motor controller unit 35 is for sending an instruction to micro motors 145 in order to change the disposition of the image sensor array 143. Needless to say, the modules or algorithms which can be implemented are not limited to what is disclosed in the present disclosure. Various other implementations can be incorporated herein.

One skilled in the art will understand that the configuration disclosed in FIG.6 is meant only to be exemplary of that embodiment, and not intended to intimate that the scope of the disclosure, is limited to that embodiment. In particular, according to variants, the lightfield camera 1 may be implemented according to a purely hardware realization, for example in the form of a dedicated component (for example in an ASIC (Application Specific Integrated Circuit) or FPGA (Field-Programmable Gate Array) or VLSI (Very Large Scale Integration) or of several electronic components embedded in an apparatus or even in a form of a mix of hardware elements and software elements.

FIG.7 shows a flowchart illustration according to an embodiment of present disclosure.

At step S1, mode change detection unit 33 detects an instruction for switching the mode upon recipient of mode switch instruction given by user. Before the step S1, the mode may be set to either a microlenses effect OFF mode or a microlenses effect ON mode. User may be able to toggle the mode between microlenses effect OFF mode and microlenses effect ON mode, for example, through the graphical user interface such as icon or button (not shown in the figure),, by toggling the mechanical switch attached to a lightfield camera (not shown in the figure) or thorough voice recognition techniques. Various other procedures for toggling the mode between OFF and ON can be incorporated herein.

At step S2, mode change detection unit 33 determines that an instruction for switching the mode is microlenses effect OFF mode or ON mode. The mode change detection unit 33 passes the mode change information to voltage application control unit 34 and motor controller unit 35. At step S2, in case the mode change detection unit 33 determines that an instruction for switching the mode is microlenses effect OFF mode, the process moves to step S3.

At step S3, voltage application control unit 34 sends an instruction to voltage application means (not illustrated in the figure) for applying voltage to the liquid crystal layer 144 to change its refractive index. As stated above, in one of the exemplary embodiment, the polarizer film 142 may be configured to block perpendicular light and passes parallel light, in that case, the refractive index of liquid crystal layer 144 may be configured to be $n_s$ to deactivate the microlenses effect. In one of the other exemplary embodiment, the polarizer film 142 may block parallel light and pass perpendicular light, in that case, the refractive index of liquid crystal layer 144 may be configured to be $n_p$ to deactivate the microlenses effect. By applying a voltage to the liquid crystal layer 144, alignment of the molecules contained in the liquid crystal layer 144 may be changed. The change of refractive index is induced by molecular alignment change triggered by the voltage application control unit 34. Any other method known by the skilled person in the art could be used for changing refractive index of liquid crystal layer 144.

At step S4, the motor controller unit 35 sends an instruction to micro motors 145 in order to change the position of the image sensor array 143 in accordance with the desired position disclosed in table 1. As stated above, in accordance with the types of lightfield camera 1, the disposition of the image sensor array 143 may vary. The motor controller unit 35 may access the registered information which contains the types of lightfield camera 1 then determine the types of lightfield camera 1 and determine the desired disposition for the image sensor array 143. The motor controller unit 35 may calculate the disposition of the image sensor array 143 in accordance with above mentioned formula depending on the types of lightfield camera 1. In accordance with the determined disposition of the image sensor array 143, the motor controller unit 35 sends an instruction to the micro motors 145 for displacing the image sensor array 143 to the appropriate position in accordance with the determined disposition.

At step S2, in case the mode change detection unit 33 determines that an instruction for switching the mode is micro lenses effect ON mode, the process moves to S5.

At step S5, voltage application control unit 34 sends an instruction to voltage application means (not illustrated in the figure) for stop applying voltage to the liquid crystal layer 144 to change its refractive index. As stated above, in one of the exemplary embodiment, the polarizer film 142 may be configured to block perpendicular light and pass parallel light, in that case, the refractive index of liquid crystal layer 144 may be configured to be $n_p$ to have the microlenses effect. In the other exemplary embodiment, the polarizer film 142 may configured to block parallel light and pass perpendicular light, in that case, the refractive index of liquid crystal layer 144 may be configured to be $n_s$ to have the microlenses effect. By stop applying a voltage to the liquid crystal layer 144, alignment of the molecules contained in the liquid crystal layer 144 may be changed and also the refractive index of liquid crystal layer 144 may be changed.

At step S6, the motor controller unit 35 sends an instruction to micro motors 145 in order to change the disposition of the image sensor array 143 back to the original position where the image sensor array 143 was positioned when microlenses effect ON mode.

Naturally, the present disclosure is not limited to the embodiments previously described.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

In view of the above, the foregoing merely illustrates the principles of the present disclosure and it will thus be appreciated that those skilled in the art will be able to devise numerous alternative arrangements which, although not explicitly described herein, embody the principles of the present disclosure and are within its spirit and scope. It is therefore to be understood that numerous modifications may be made to the illustrative embodiments and that other arrangements may be devised without departing from the scope of the present principles.

## Claims

1.  A digital imaging system for switching image capturing mode comprising:

    a primary lens (10);
    an image sensor array (143); and
    an optical element (2) comprising at least a first layer and a second layer and arranged between the primary lens (10) and the sensor array (143),

    wherein, the first layer having two functioning modes :

       - A first functioning mode, called first layer effect OFF, in which rays of light leaving the first layer to be captured by the image sensor array are not refracted,
       - A second functioning mode, called first layer effect ON, in which rays of light leaving the first layer to be captured by the image sensor array are refracted,

    a value of a refractive index of the second layer is changed in accordance with a change between the first functioning mode and the second functioning mode of the first layer.

**2.** The digital imaging system of claim 1,
in the first functioning mode, the value of the refractive index of the second layer is equal to a value of a refractive index of the first layer.

**3.** The digital imaging system of claim 1,
in the second functioning mode, the value of the refractive index of the second layer is different from a value of a refractive index of the first layer.

**4.** The digital imaging system of claim 1,
wherein the first layer comprises a lenslet array sheet (141) and the second layer comprises a liquid crystal layer (144).

**5.** The digital imaging system of claim 1, further comprising:

polarizer film (142) disposed onto the first layer;

wherein the polarizer film (142) is configured to polarize an incoming light either to a parallel or perpendicular direction with respect to a plane of the incoming light.

**6.** The digital imaging system of claim 1, further comprising:

a micro motors (145) for changing a disposition of the image sensor array (143) in case switched to the first functioning mode, in accordance with a types of digital imaging system either to :

a first focal plane that is a focal plane of the primary lens (10);
a second focal plane that is derived by a + b; or
a third focal plane that is derived by b - a

wherein the a is a distance between the focal plane of the primary lens (10) and the focal plane of the optical element, and the b is a distance between plane of the image sensor array (143) and a plane of the optical element.

**7.** A method for switching image capturing mode in digital imaging system including a primary lens, an image sensor array, and an optical element comprises at least a first layer and a second layer arranged between the primary lens and the sensor array, the first layer having two functioning modes :

- A first functioning mode, called first layer effect OFF, in which rays of light leaving the first layer to be captured by the image sensor array are not refracted,
- A second functioning mode, called first layer effect ON, in which rays of light leaving the first layer to be captured by the image sensor array are refracted,

the method comprising:

changing a value of a refractive index of the second layer in accordance with a mode change between the first functioning mode and the second functioning mode of the first layer (S3).

**8.** The method of claim 7 further comprising:

in the first functioning mode, the value of the refractive index of the second layer is equal to a value of the refractive index of the first layer.

**9.** The method of claim 7 further comprising:

in the second functioning mode, the value of the refractive index of the second layer is different from the value of the refractive index of the first layer.

**10.** The method of claim 7,
wherein the first layer comprises a lenslet array sheet and the second layer comprises a liquid crystal layer.

**11.** The method of claim 7, the changing a value of the refractive index of the second layer further comprising:

changing the value of the refractive index of the second layer in accordance with a polarization direction of incoming light,

wherein the incoming light is polarized either to a parallel or perpendicular direction with respect to a plane of the incoming light by a polarizer film disposed onto the first layer.

12. The method of claim 7 further comprising:

in case switched to the first functioning mode, changing a disposition of the image sensor array (S4) in accordance with a types of digital imaging system either to:

a first focal plane that is a focal plane of the primary lens;
a second focal plane that is derived by a + b; or
a third focal plane that is derived by b - a

wherein the a is a distance between the focal plane of the primary lens and the focal plane of the optical element, and the b is a distance between plane of the image sensor array and a plane of the optical element.

13. Computer program product downloadable from a communication network and/or recorded on a medium readable by computer and/or executable by a processor, comprising program code instructions for implementing a method according to at least one of claims 7 to 12.

14. Non-transitory computer-readable medium comprising a computer program product recorded thereon and capable of being run by a processor, including program code instructions for implementing a method according to at least one of claims 7 to 12.

400

405

420 430 460

410

450 425 425

435

440 415

445

**FIG.1A**

405 445 400

430 435

410

420 560 450 425 425

440 415

**FIG.1B**

**FIG.2**

EP 3 264 743 A1

Light rays

144

141

142

$n_1$

$n_2$

2

143

**FIG.3A**

144

141

142

$n_1$

$n_1$

2

143

**FIG.3B**

Primary lens 10

Microlenses sheet 141

Sensor plane 143

FIG.4

D

F

a

b

Main lens
10

Main
focal
plane
11

Micro
lenses
sheet
141

Sensor
plane
143

## FIG.5A

F

D

a

b

Main lens
10

Micro
lenses
sheet
141

Sensor
plane
143

Main
focal
plane
11

## FIG.5B

1

51

53 RAM

55 ROM

CPU

54

33 mode change detection unit

35 motor contoroller unit

34 voltage application control unit

58 I/F

143 image sensor

145 micro motors

144 liquid crystal layer

**FIG.6**

Start

receiving instruction for
switching a mode — S1

OFF mode? — S2

NO — S5 / YES

send instruction for stop
applying voltage to the
liquid crystal layer 144 — S5

send instruction for
applying voltage to the
liquid crystal layer 144 — S3

send instruction to micro
motors 145 — S6

determine the type of
lightfield camera 1 and
send instruction to micro
motors 145 — S4

End

**FIG.7**

Europäisches
Patentamt

European
Patent Office

Office européen
des brevets

# EUROPEAN SEARCH REPORT

Application Number

EP 16 30 5825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/247986 A1 (BHAT JEROME CHANDRA [US] ET AL) 3 September 2015 (2015-09-03)<br>* paragraph [0051] - paragraph [0068] *<br>* claim 1 *<br>* figures 6,19 *<br>* paragraph [0080] - paragraph [0085] *<br>----- | 1-14 | INV.<br>H04N5/232<br>H04N5/225 |

TECHNICAL FIELDS
SEARCHED      (IPC)

H04N

The present search report has been drawn up for all claims

| Place of search | Date of completion of the search | Examiner |
|---|---|---|
| The Hague | 8 November 2016 | Didierlaurent, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                    
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 5825

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2016

| Patent document cited in search report | Publication date | Patent family member(s) | Publication date |
|---|---|---|---|
| US 2015247986 A1 | 03-09-2015 | US 2015070474 A1<br>US 2015247986 A1 | 12-03-2015<br>03-09-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130076930 A1